# DEMANDE DE BREVET EUROPEEN

(11) **EP 0 854 470 A1**
(43) Date de publication de la demande: **22.07.1998**
(21) Numéro de dépôt: 98200100.0
(22) Date de dépôt: 16.01.1998
(51) Int. Cl.: G11B 5/53

(54) **Enregistreur/Lecteur magnétique à bande comprenant un dispositif de couplage capacitif**

(30) Priorité: 21.01.1997 FR 9700583
(71) Demandeur: ENERTEC S.A., 78140 Vélizay-Villacoublay (FR)
(72) Inventeur: Queau, Alain, 75015 Paris (FR); Duquenne, Alain, 92140 Clamart (FR); Avenard, Patrick, 91120 Palaiseau (FR)
(74) Mandataire: Richebourg, Michel François

(57) **Abrégé**

L'invention est relative à un enregistreur/lecteur magnétique à bande comprenant plusieurs têtes (30-45) magnétiques animées d'un mouvement de rotation à la périphérie d'une fente équatoriale (4) d'un tambour cylindrique (1), sur la surface duquel défile une bande (7) enroulée hélicoïdalement et un dispositif de couplage capacitif (20), ledit dispositif étant destiné à transmettre des signaux électriques, entre une partie rotative autour d'un axe, liée aux têtes et formant rotor et une partie fixe formant stator, ledit dispositif (20) comprenant au moins un organe de couplage (47-54, 73-80; 204; 220) comportant une partie mobile (47a-54a, 73a-80a ; 206 ; 222 ; 230, 232) et une partie fixe (47b-54b, 73b-80b) liées respectivement au rotor et au stator, caractérisé en ce que les parties mobile et fixe de l'organe de couplage sont réalisées sous la forme d'anneaux et/ou de segments d'anneaux, dits de couplage, respectivement disposés dans deux plans parallèles entre eux (P₁, P₂) et perpendiculaires audit axe de rotation du rotor, les parties mobile et fixe de chaque organe de couplage étant disposées en regard l'une de l'autre.

## Description

La présente invention concerne un enregistreur à têtes tournantes pourvu d'un dispositif de couplage rotatif capacitif.

On sait que de tels enregistreurs comprennent une ou plusieurs têtes magnétiques d'enregistrement/lecture, fixées sur la périphérie d'un élément de révolution, coaxial à l'axe d'un tambour cylindrique contre la surface duquel est enroulée hélicoïdalement une bande magnétique défilant entre une bobine émettrice et une bobine réceptrice. Les informations sont enregistrées sur la bande selon des pistes obliques dont l'inclinaison est fonction du rapport des vitesses respectives de la bande et de la tête. Les enregistreurs de ce type comprennent deux familles. Dans la première famille, les têtes sont fixées sur la périphérie d'un plateau tournant, coaxial au tambour, et disposé dans une fente prévue dans un plan équatorial du tambour; devant la fente défile ladite bande magnétique enroulée hélicoïdalement sur le tambour. Dans l'autre famille, le tambour comprend une partie inférieure fixe et une partie supérieure tournante à la base de laquelle les têtes sont fixées.

Afin de véhiculer les informations entre les têtes tournantes et les moyens (fixes) associés à l'enregistreur et destinés à traiter ou émettre ces informations (respectivement pour la lecture ou l'enregistrement), il est prévu, pour chaque tête, un dispositif de couplage électrique rotatif entre la partie fixe et les parties tournantes (plateau porte-tête) de l'enregistreur.

On connaît un tel enregistreur d'après le document EP 0 332 520.

Selon ce document, pour chaque tête, le dispositif de couplage électrique rotatif comprend un condensateur qui est constitué de deux armatures conductrices, cylindriques et concentriques, disposées en regard l'une de l'autre, l'une des armatures étant solidaire de la partie fixe formant stator et l'autre armature étant solidaire de la partie rotative liée à la tête et formant rotor.

Les dispositifs de couplage électrique rotatifs sont ainsi empilés l'un au dessus de l'autre dans l'enregistreur.

Or, à bord des aéronefs, l'espace disponible pour les équipements techniques est fortement limité et le volume des équipements embarqués doit donc être aussi réduit que possible.

Il serait par conséquent intéressant de réduire l'encombrement des enregistreurs connus tels que celui mentionné ci-dessus.

La Demanderesse a inventé une nouvelle structure d'un dispositif de couplage rotatif capacitif qui, lorsqu'il comprend plusieurs organes de couplage pour plusieurs têtes magnétiques, est moins volumineux que les dispositifs de couplage de l'art antérieur tels que celui décrit dans le document EP 0 332 520 dans lequel les armatures des différents organes de couplage sont cylindriques et empilées l'une au dessus de l'autre.

Toutefois, lorsque le dispositif de couplage rotatif capacitif selon l'invention ne comprend qu'un organe de couplage celui-ci peut avoir une fonction différente de la transmission de signaux électriques représentatifs d'informations enregistrées et/ou lues sur la bande magnétique.

Par exemple, un tel dispositif de couplage peut servir à réaliser la commutation des têtes magnétiques lorsque la bande magnétique s'enroule sur le tambour sur une portion angulaire inférieure à 180° vu en section transversale par rapport à l'axe du tambour.

La présente invention a ainsi pour objet un enregistreur/lecteur magnétique à bande comprenant plusieurs têtes magnétiques animées d'un mouvement de rotation à la périphérie d'une fente équatoriale d'un tambour cylindrique, sur la surface duquel défile une bande enroulée hélicoïdalement et un dispositif de couplage capacitif, ledit dispositif étant destiné à transmettre des signaux électriques, entre une partie rotative autour d'un axe, liée aux têtes et formant rotor et une partie fixe formant stator, ledit dispositif comprenant au moins un organe de couplage comportant une partie mobile et une partie fixe liées respectivement au rotor et au stator, caractérisé en ce que les parties mobile et fixe de l'organe de couplage sont réalisées sous la forme d'anneaux et/ou de segments d'anneaux, dits de couplage, respectivement disposés dans deux plans parallèles entre eux et perpendiculaires audit axe de rotation du rotor, les parties mobile et fixe de l'organe de couplage étant disposées en regard l'une de l'autre. Selon un mode de réalisation de l'invention, le dispositif de couplage transmet des signaux électriques représentatifs d'informations enregistrées et/ou lues sur la bande.

Selon une caractéristique de l'invention, au moins un organe de couplage est formé d'anneaux.

Un organe de couplage peut être associé à une seule tête magnétique, voire à plus de deux têtes magnétiques.

Pour que chaque organe de couplage conserve la même capacité la dimension radiale des anneaux de couplage diminue lorsque la distance de ceux-ci par rapport à l'axe de rotation augmente.

Afin de réduire les perturbations de transmission dues aux parasites entre deux anneaux de couplage consécutifs d'une part, et entre les anneaux de couplage et la masse d'autre part, un anneau dit de blindage est disposé entre lesdits anneaux dans le même plan que ceux-ci.

La dimension radiale des anneaux de blindage diminue lorsque la distance de ceux-ci par rapport à l'axe de rotation augmente.

Selon une caractéristique de l'invention, les anneaux de couplage liés au rotor et au stator sont respectivement disposés sur deux faces en regard de deux substrats différents.

La face de chaque substrat qui est opposée à celle portant les anneaux de couplage porte des circuits électroniques, ainsi les liaisons filaires sont réduites par rapport à celles existant dans le dispositif de couplage décrit dans le document EP 0 332 520 puisque les connexions électriques entre les circuits et les anneaux ont juste la dimension de l'épaisseur du substrat. Ceci permet de diminuer les effets parasites et donc d'augmenter la bande passante du dispositif de couplage.

Selon d'autres caractéristiques :
- les circuits électroniques comprennent des circuits récepteurs des signaux électriques transmis par le dispositif de couplage rotatif capacitif ainsi que des circuits d'émission des signaux électriques à transmettre par ledit dispositif,
- les circuits de réception des signaux électriques transmis par le dispositif de couplage rotatif capacitif sont des circuits adaptateurs d'impédance,
- l'un des anneaux ou segments d'anneaux de couplage de chaque organe de couplage est relié à un circuit récepteur comprenant un élément à grande impédance d'entrée,

Par exemple, l'élément à grande impédance d'entrée est un transistor à effet de champ à double porte.

Afin que la fréquence de coupure du circuit haute impédance associé à l'organe de couplage capacitif soit la plus basse possible (pour ne pas affecter la limite inférieure de la gamme de fréquences) le circuit récepteur comprend en outre une impédance de valeur élevée. La capacité d'entrée équivalente du transistor à effet de champ à double porte étant particulièrement faible, la perte de transfert est minimisée. Par exemple, le substrat est du type multicouche.

Avantageusement, pour chaque anneau ou segment d'anneau de couplage relié à un circuit récepteur comprenant un élément à grande impédance d'entrée un anneau dit de garde est formé dans le substrat correspondant et est relié à la sortie dudit élément à grande impédance d'entrée.

Selon une caractéristique, l'anneau de garde est disposé en regard de l'anneau ou du segment d'anneau de couplage pour former un écran vis-à-vis de signaux parasites provenant de la face du substrat qui porte les circuits électroniques et pour diminuer la capacité parasite.

Selon une caractéristique supplémentaire, deux anneaux de blindage supplémentaires disposés dans le substrat mu!ticouche encadrent l'anneau de garde dans un plan perpendiculaire à l'axe du rotor.

Avantageusement, un organe de couplage supplémentaire est prévu pour mesurer un bruit correspondant à un potentiel dit de mode commun qui apparaît aux bornes des organes de couplage destinés à transmettre des signaux électriques représentatifs d'informations enregistrées sur la bande (respectivement lues), et les signaux issus de ces organes de couplage et de l'organe de couplage supplémentaire sont ensuite soustraits pour que le potentiel de mode commun s'annule.

Selon un autre mode de réalisation de l'invention, le dispositif de couplage a une fonction de commutation des têtes magnétiques suivant leur position par rapport à la bande.

Selon une caractéristique, au moins un organe de couplage est formé de segments d'anneau.

Selon encore un autre mode de réalisation de l'invention, le dispositif de couplage sert à transmettre des signaux électriques représentatifs d'informations enregistrées et/ou lues sur la bande et à commuter des têtes magnétiques suivant leur position par rapport à la bande.

Dans cette configuration, le dispositif de couplage comprend plusieurs organes de couplage dont au moins un est formé de segments d'anneau, les autres organes de couplage étant formés d'anneaux.

L'invention sera bien comprise à la lumière de la description qui suit, en se référant aux dessins annexés sur lesquels :
- la figure 1 est un schéma en perspective d'un enregistreur/lecteur du type auquel s'applique l'invention,
- la figure 2 est une vue de dessus du dispositif de la figure 1,
- la figure 3 est une vue partielle en coupe du tambour et des organes électroniques et mécaniques associés,
- la figure 4 est un schéma montrant de côté de manière très schématique les liaisons rotor-stator, et le plateau en perspective,
- la figure 5 est une vue schématique en perspective de deux organes de couplage respectivement pour l'enregistrement et la lecture,
- la figure 6 est une vue schématique en perspective d'un dispositif de couplage selon l'invention où une partie du disque lié au rotor a été partiellement enlevée,
- la figure 7 est une vue schématique partielle agrandie en coupe dans un plan contenant l'axe de rotation du rotor du dispositif de couplage selon l'invention ,
- les figures 8 et 9 sont des schémas électroniques montrant les circuits reliant le stator et une tête, respectivement d'enregistrement et de lecture,
- la figure 10 est un schéma d'une forme de réalisation qui permet de supprimer le bruit correspondant au potentiel de mode commun,
- la figure 11 est une vue schématique en section transversale d'une bande magnétique enroulée à 180° sur un tambour,
- la figure 12 est une vue schématique montrant un dispositif de couplage selon l'invention comprenant un organe de couplage de commutation et un organe de couplage destiné à transmettre des signaux électriques représentatifs d'informations enregistrées et/ou lues sur une bande magnétique,
- la figure 13 représente schématiquement un organe de couplage de commutation selon l'invention pour seize têtes magnétiques,
- les figures 14a et 14b représentent schématiquement en vue de dessus les parties mobiles et fixes de deux organes de couplage de commutation selon l'invention.

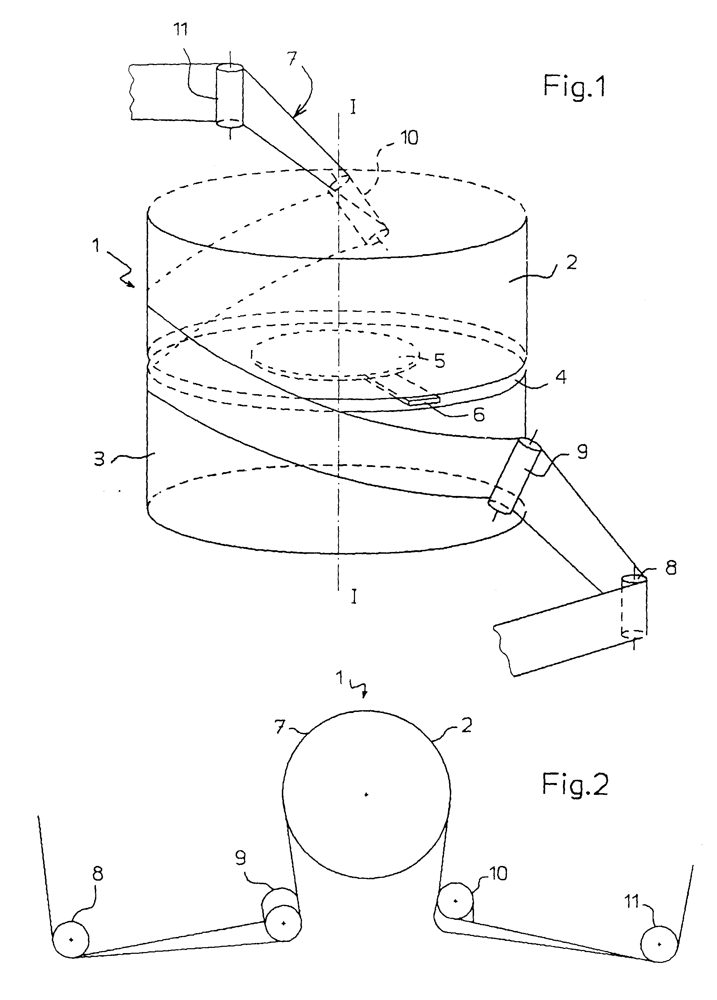

Le dispositif de la présente invention est décrit ci-après en relation avec un exemple d'application au domaine des appareils d'enregistrement/lecture à têtes magnétiques tournantes, du type connu en soi et tels que représenté schématiquement sur les figures 1 et 2.

L'enregistreur/lecteur comporte un tambour cylindrique 1 qui se décompose en tambour supérieur 2 et tambour inférieur 3, séparés par une fente 4 disposée dans un plan équatorial perpendiculaire à l'axe I-I du tambour et sensiblement à mi-hauteur de ce dernier.

Dans cette fente, est prévu un élément de forme générale sensiblement circulaire, appelé plateau 5, susceptible d'être animé d'un mouvement rotatif autour de l'axe I-I du tambour. Le plateau est porteur d'une, et généralement de plusieurs, têtes magnétiques 6 disposées régulièrement sur sa périphérie et faisant très légèrement saillie par rapport à la surface définissant la paroi du tambour.

Une bande magnétique 7 est susceptible de s'enrouler hélicoïdalement autour du tambour 1 pour former, en vue de dessus comme montré sur la figure 2, un oméga. Un ensemble de galets 8 à 11 guident la bande 7 et la maintiennent selon cette configuration pendant son défilement, depuis une bobine débitrice vers une bobine réceptrice (non représentées et connues en elles-mêmes). Les informations sont enregistrées/lues sur la bande selon des segments de pistes parallèles et obliques par rapport à l'axe de la bande.

Il est entendu que l'invention s'applique également à des enregistreurs/lecteurs du type dans lesquels les têtes sont fixées sur la périphérie de la base d'un tambour supérieur tournant, coaxial à un tambour inférieur fixe, la bande défilant devant la fente définie entre les deux tambours.

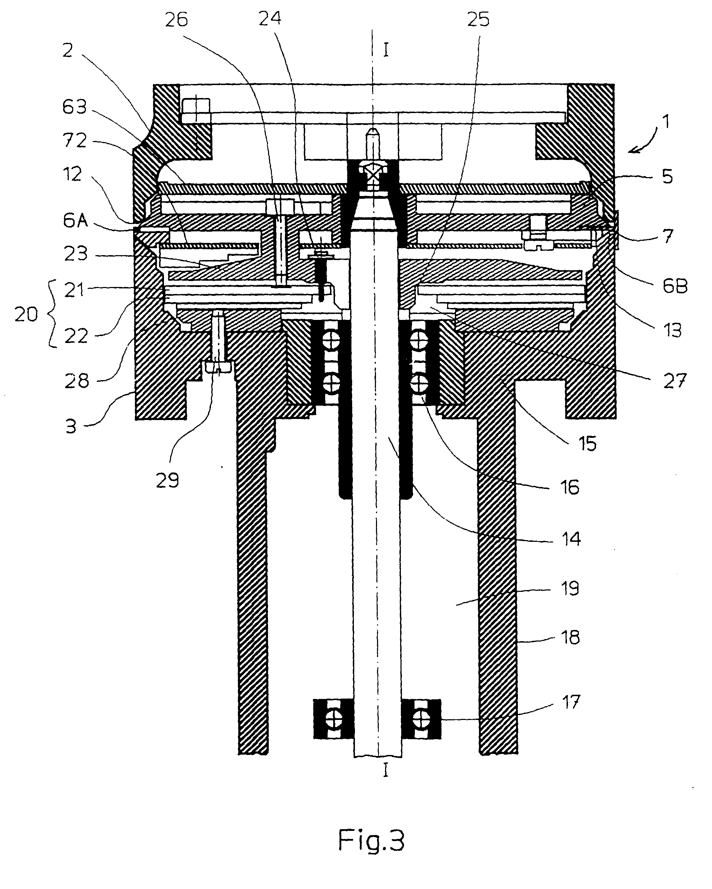

Sur la figure 3 sont représentés, en coupe, le tambour et les organes mécaniques y associés d'un enregistreur à têtes tournantes, dans laquelle les éléments similaires à ceux des figures 1 et 2 portent la même référence d'une figure à l'autre.

Le plateau 5 comprend sur sa périphérie des languettes radiales 12, 13 à l'extrémité de chacune desquelles est fixée une tête magnétique 6A, 6B. Le plateau est solidaire d'un moyeu 14 coaxial avec l'axe I-I du tambour 1 et monté à rotation sur le stator 15 ; ledit moyeu 14 (formant rotor) est lié au tambour par l'intermédiaire de roulements à billes (connus en soi) respectivement supérieur 16 et inférieur 17.

A l'intérieur du tambour inférieur 3 est prévue une chemise cylindrique 18, coaxiale au moyeu 14, et disposée entre les roulements 16 et 17.

Cette chemise, de diamètre supérieur à celui du moyeu, définit une chambre cylindrique 19 dans laquelle est logé le moteur, par exemple à effet Hall, destiné à assurer la rotation du moyeu 14 du plateau 5 et des têtes magnétiques et l'alimentation tournante destinée à alimenter le plateau.

Un dispositif de couplage capacitif rotatif 20 est logé dans la partie supérieure du tambour inférieur 3 (Fig3).

Ce dispositif 20 est destiné à assurer la liaison entre les têtes magnétiques liées au rotor et les moyens électroniques (non représentés sur les figures 1 et 2), respectivement émetteurs et récepteurs des informations, et liés au rotor et au stator.

A titre illustratif, l'enregistreur/lecteur magnétique peut être disposé à bord d'un aéronef et reçoit les informations provenant de capteurs et/ou d'organes de contrôle et/ou de commande dudit aéronef. Ces informations sont ainsi stockées sur bande magnétique pour être généralement lues et exploitées ultérieurement.

Lors de l'enregistrement, les moyens émetteurs émettent des informations à enregistrer sur bande vers les têtes, via le dispositif de couplage (décrit ci-après); lors de la lecture, les informations sont véhiculées dans l'autre sens, depuis les têtes vers les moyens électroniques aptes à stocker lesdites informations et/ou les adresser vers des moyens d'exploitation.

Comme représenté sur la figure 3, le dispositif de couplage 20 est constitué de deux disques 21, 22 de même diamètre extérieur et disposés en regard l'un de l'autre autour du moyeu 14. Le disque 21 solidaire du rotor est monté sur une pièce 23 par un moyen de fixation 24 formant support, de forme sensiblement circulaire, et dont une partie centrale qui entoure le moyeu 14 est prolongée vers le bas et pénètre dans une ouverture centrale 25 dudit disque 21.

Cette pièce 23 est solidarisée au plateau 5 par un moyen de fixation 26. Le disque 22 présente également dans sa partie centrale une ouverture 27 de dimensions supérieures à celles de l'ouverture 25 et dans laquelle pénètre la partie centrale de la pièce 23.

Le disque 22 solidaire du stator est monté sur une pièce 28 formant support qui est liée au tambour inférieur 3 par l'intermédiaire d'un moyen de fixation 29.

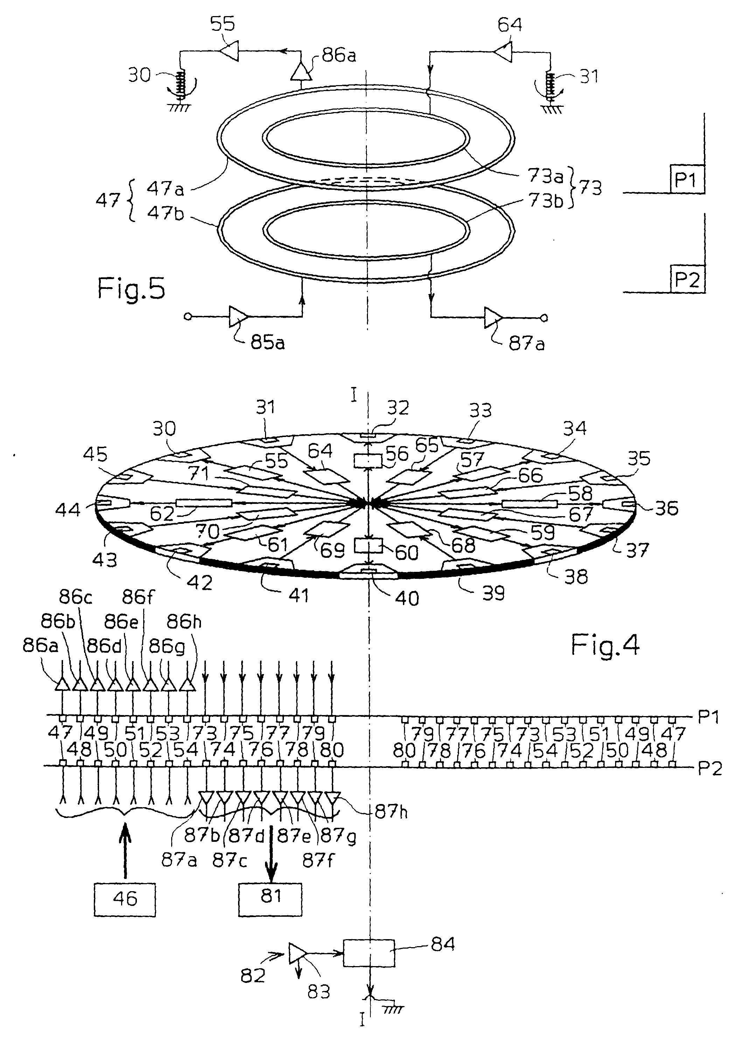

Sur la figure 4 est représenté schématiquement le chemin de circulation des informations au sein d'un enregistreur/ lecteur magnétique auquel s'applique l'invention. Sur la périphérie d'un plateau rotatif 5 sont disposées seize têtes magnétiques 30 à 45 espacées régulièrement.

Selon l'exemple décrit et représenté, l'enregistreur/lecteur comprend seize têtes dont huit (30, 32, 34, 36, 38, 40, 42, 44) sont destinées à l'enregistrement et huit autres (31, 33, 35, 37, 39, 41, 43, 45) sont destinées à la lecture. Le nombre de têtes peut varier de quatre à trente deux.

En effet, on sait que la fiabilité de tels appareils est un élément important; il est donc nécessaire de s'assurer que l'information à été enregistrée correctement, de manière à pouvoir l'exploiter ultérieurement. A cette fin, on effectue juste après l'enregistrement, une lecture de la piste qui vient d'être enregistrée. Ainsi, une tête d'enregistrement est suivie (en terme de position angulaire sur le disque) d'une tête de lecture.

Des moyens 46 émetteurs d'information (connus en eux-mêmes), reliés aux sources d'information à enregistrer, ont leur sortie reliée à des organes de couplage électrique tournants constitutifs du dispositif de couplage 20 (en nombre égal au nombre de têtes d'enregistrement), portant les références respectives 47, 48, 49, 50, 51, 52, 53, 54 et assurant le couplage électrique entre les parties fixes (stator) et les parties tournantes (rotor) ; seul l'axe du rotor est représenté sur la figure 4. La partie toumante de chaque organe de couplage électrique toumant 47-54 est reliée aux têtes d'enregistrement 30, 32, 34, 36, 38, 40, 42, 44 notamment via un circuit électronique d'amplification respectivement 55, 56, 57, 58, 59, 60, 61, 62 disposés sur un support 63 positionné au dessus du plateau 5.

De la même manière, chaque tête de lecture 31, 33, 35, 37, 39, 41, 43, 45 est reliée, par l'intermédiaire de circuits d'amplification respectivement 64, 65, 66, 67, 68, 69, 70, 71 disposés sur un support 72 disposé entre la pièce 23 et le plateau 5, à la partie tournante d'organes de couplage électrique respectivement 73, 74, 75, 76, 77, 78, 79, 80 ; la partie fixe de ces derniers est reliée à l'entrée de moyens 81 récepteurs des informations lues qui sont ensuite acheminées vers des moyens de stockage ou d'exploitation (non représentés). Les moyens respectivement récepteurs, de stockage sont connus en eux-mêmes.

Ainsi, dans l'exemple considéré, à chaque tête magnétique correspond un organe de couplage capacitif.

Les organes de couplage sont coaxiaux et disposés à proximité les uns des autres, perpendiculairement à l'axe du rotor.

Selon l'exemple décrit, il est prévu seize organes de couplage, à savoir huit pour l'enregistrement et huit pour la lecture.

Il est également prévu des moyens (connus en soi) d'alimentation 82 en énergie électrique, comprenant une source d'énergie 83 et des organes tournants 84 (connus en soi) destinés à assurer la transmission de l'énergie entre le stator et le rotor ainsi qu'une mise à la masse.

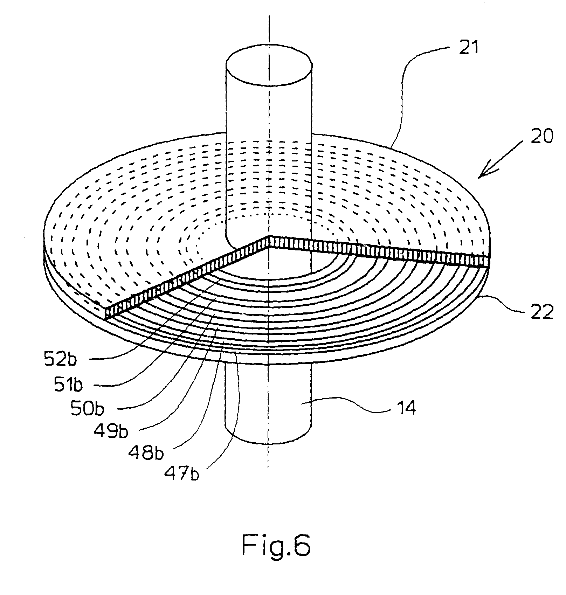

Les organes de couplage capacitif selon l'invention sont décrits plus en détail ci-après, en relation avec les figures 5, 6.

La figure 5 montre en perspective un organe de couplage d'enregistrement 47 et un organe de couplage de lecture 73. Chaque organe de couplage 47, 73 constitue un condensateur tournant formé de deux parties, l'une mobile 47a, 73a liée au rotor et l'autre fixe 47b, 73b liée au stator.

Chacune des parties constitue une des armatures du condensateur. Ces armatures ont la forme d'anneaux circulaires en matériau conducteur, tel que par exemple du cuivre.

Les deux armatures d'un même organe de couplage, par exemple 47, sont de mêmes dimensions et sont disposées à égale distance de l'axe du rotor.

Les deux armatures de l'autre organe de couplage 73 sont également de mêmes dimensions entre elles et sont disposées à égale distance de l'axe du rotor.

Comme le montre la figure 5, les armatures 47a, 73a, (resp. 47b, 73b) des organes de couplages qui sont liées au rotor (resp. au stator) sont concentriques et sont disposées dans un même plan P1 (resp. P2) perpendiculaire à l'axe du rotor.

La figure 4 montre la disposition (vue en coupe) des armatures mobiles et fixes des seize organes de couplage respectivement dans les deux plans P1 et P2. La distance entre les deux armatures d'un même organe de couplage dans une direction parallèle à l'axe du rotor, également appelée hauteur est, par exemple, de l'ordre de 35 à 60 microns, pour une dimension radiale ou largeur d'armature de l'ordre de 0,5 à 1,5 mm.

La capacité de transfert est de l'ordre de quelques pF à quelques dizaines de pF, typiquement de 10 à 30 pF. Le matériau diélectrique entre armatures d'un même condensateur est l'air ambiant.

Chaque condensateur de couplage comprend une armature d'émission et une armature de réception. Pour un condensateur d'enregistrement, l'armature d'émission est l'armature fixe, et l'armature de réception est l'armature tournante. La correspondance est inverse pour un condensateur de lecture.

Un circuit émetteur 85a (partie des moyens 46 émetteurs) est relié par sa sortie à l'armature fixe 47b du condensateur de couplage 47 pour l'enregistrement, tandis que l'armature tournante 47a est reliée à l'entrée d'un circuit récepteur 86a dont la sortie est connectée (via le rotor) à la tête magnétique 30 par l'intermédiaire du circuit d'amplification correspondant 55 (cf. figure 4). Sont ainsi représentés sur la figure 4 huit circuits récepteurs 86a, 86b, 86c, 86d, 86e, 86f, 86g, et 86h pour chacun des condensateurs d'enregistrement 47-54.

Inversement, l'armature tournante 73a, du condensateur de couplage 73 pour la lecture, est liée directement à la tête 31 via le circuit d'amplification 64 (cf figure 4), tandis que l'armature fixe 73b est reliée à l'entrée d'un circuit récepteur 87a faisant partie des moyens récepteurs (cf. figure 4).

La figure 6 représente dans une vue en perspective très simplifiée, les deux disques 21 et 22 qui constituent le dispositif de couplage 20 selon l'invention aménagé autour du moyeu 14.

Sur le disque 22 lié au stator quelques uns seulement 47b, 48b, 49b, 50b, 51b, 52b des anneaux de couplage (armatures fixes) concentriques de la figure 4 sont représentés.

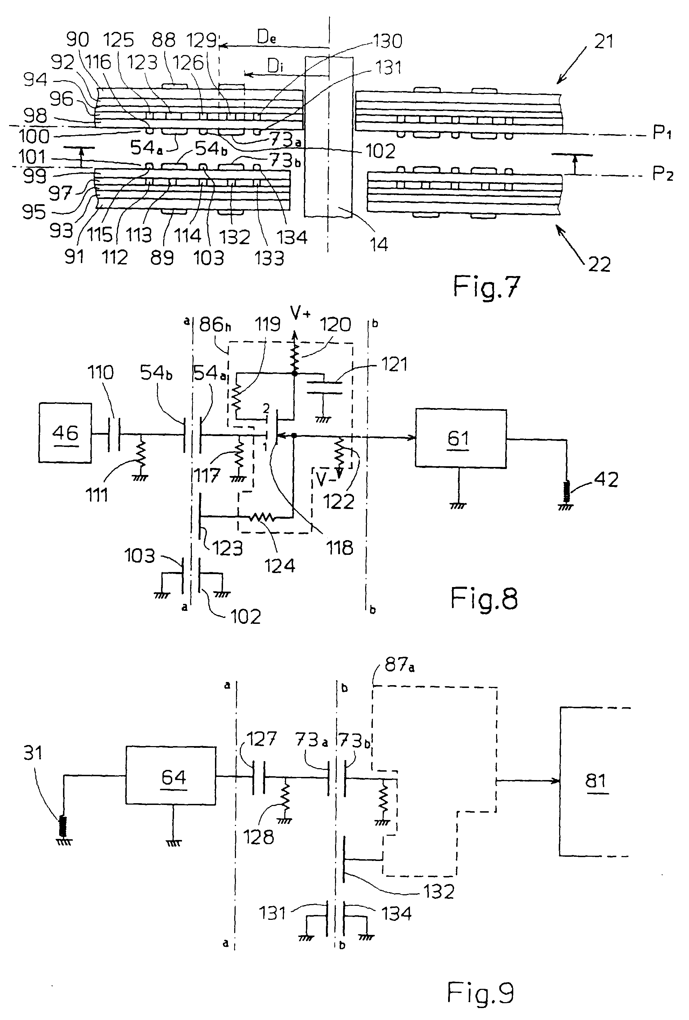

Les disques représentés sur les figures 6 et 7 sont des substrats du type multicouche constitués d'un assemblage de sept couches alternées de matériau conducteur, par exemple en cuivre, et de matériau isolant comme par exemple de la résine époxy , du verre ou de l'alumine.

Ainsi que représenté sur la figure 7, les disques 21 et 22 vus en coupe partielle sont assemblés par des techniques classiques de photogravure connues dans le domaine de la micro-électronique.

Le substrat 21 (resp. 22) est composé d'une première couche 88 (resp. 89) de cuivre, d'épaisseur par exemple comprise entre 10 et 15 µm, sur laquelle vont être montés des circuits électroniques non représentés sur cette figure, d'une deuxième couche 90 (resp. 91) constituée de résine époxy, d'une troisième couche 92 (resp. 93) de cuivre de même épaisseur que celle de la première couche, d'une quatrième couche 94 (resp. 95) de colle époxy, d'épaisseur par exemple égale à 0,2mm, d'une cinquième couche 96 (resp. 97) de cuivre de même épaisseur que celle de la première couche, d'une sixième couche 98 (resp. 99) constituée de résine époxy et d'une septième couche 100 (resp.101) de cuivre de même épaisseur que celle de la première couche et disposée dans le plan P1(resp.P2).

Chaque substrat a une épaisseur totale par exemple égale à 1,3mm.

D'un point de vue pratique, un tel substrat peut être réalisé par collage au moyen de la couche 94 (resp.95) de deux substrats moins épais constitués chacun respectivement par l'empilement des couches 88, 90, 92 (resp.89, 91, 93) et 96, 98, 100 (resp.97, 99, 101).

Ces substrats sont symétriques par rapport à la couche 94 (resp.95) et, à cet effet, la troisième couche 92 (resp. 93) est là pour assurer un équilibre des masses des deux empilements.

En effet, en l'absence de la troisième couche de cuivre 92 (resp. 93) les masses du substrat seraient mal réparties et il risquerait de se déformer au cours de sa fabrication ou en fonction d'une variation de température.

Les liaisons électriques entre les couches 88, 96 et 100 (resp.89, 97 et 101) se font par l'intermédiaire de trous métallisés non représentés qui traversent toute l'épaisseur du substrat et ont par exemple une épaisseur d'environ 0,6mm. Les trous qui relient la couche 88 (resp.89) à la couche 96 (resp.97) ne sont pas métallisés au droit des couches 92 et 100 (resp. 93 et 101) et ceux reliant les couches 88 et 100 (resp. 89 et 101) ne sont pas métallisés au droit des couches 92 et 96 (resp. 93 et 97).

Les couches respectives 100, 101 de chaque substrat 21, 22 comprennent une succession d'anneaux concentriques en cuivre constituée d'anneaux de couplage et d'anneaux dits de blindage de façon à ce que deux anneaux de couplage consécutifs, par exemple 54a, 73a (resp.54b, 73b) soient séparés par un anneau de blindage, par exemple 102 (resp. 103).

Ces anneaux de couplage 54a, 54b (resp.73a 73b) sont utilisés pour la transmission de signaux d'écriture (resp. de lecture).

Sur la figure 4, les anneaux de blindage ne sont pas représentés afin de simplifier le schéma mais ils sont disposés entre les anneaux de couplage qui sont représentés.

Ces anneaux de blindage servent à réduire les couplages parasites existant entre deux anneaux de couplage consécutifs et qui peuvent introduire des risques de diaphonie lors de la transmission de signaux.

Les couches respectives 100, 101 des deux substrats 21, 22 sont symétriques l'une de l'autre par rapport à un plan médian passant entre les substrats 21 et 22 et qui est parallèle aux plans P1, P2.

La largeur de la piste d'un anneau de blindage a été rendue la plus faible possible pour diminuer les capacités parasites tout en minimisant la diaphonie.

Tous les organes de couplage doivent avoir la même valeur de capacité de couplage qui s'écrit C = ε0 εr S/e, où ε0, εr désignent respectivement les valeurs des constantes diélectriques du vide et de l'air, S est la surface annulaire en regard des anneaux d'un même organe de couplage (largeur de piste) et e est la distance séparant ces deux anneaux en regard.

Pour ce faire, les diamètres intérieur Di et extérieur De (Fig.7) des anneaux d'un même organe de couplage doivent être ajustés pour que S reste constante quelle que soit la position de l'anneau par rapport au moyeu 14.

Ainsi, la largueur ou dimension radiale des anneaux de couplage diminue au fur et à mesure que la distance de ceux-ci par rapport au moyeu 14 augmente.

Il en est de même pour les anneaux de blindage.

Les anneaux de couplage et de blindage formant les couches 100, 101 sont revêtus, par exemple, d'un dépôt d'or d'épaisseur égale à 1 ou 2 µm afin d'éviter l'oxydation des conducteurs et de s'affranchir de toute différence de potentiel développée par deux matériaux différents en regard.

La figure 8 représente une vue détaillée, extraite de la figure schématique 4, de l'ensemble de la circuiterie électronique, associée à l'une des têtes magnétiques d'enregistrement.

Comme représenté sur la figure 8, les moyens émetteurs d'information 46 sont reliés à l'une des armatures d'un condensateur 110 destiné à filtrer une tension continue et de capacité par exemple égale à 100 nF. L'autre armature est reliée, d'une part, à la masse par l'intermédiaire d'une résistance 111 et, d'autre part, à l'une des armatures 54b de l'organe de couplage 54 qui est appelée armature émettrice.

Le condensateur 110 et la résistance 111 sont des composants montés en surface sur la couche 89 du disque fixe 22 (non représentés sur la figure 7) et l'armature 54b de l'organe de couplage est l'un des éléments qui constituent la couche 101 de ce disque. Des anneaux de blindage 112, 113, 114 sont formés dans la couche 97 afin de créer un effet d'écran autour de l'armature 54b vis-à-vis des capacités parasites.

L'action de ces anneaux s'ajoute à celle des anneaux de blindage 103, 115 qui encadrent l'armature 54b.

L'armature 54a dite réceptrice de l'organe de couplage 54 est l'un des éléments constituant la couche 100 du disque mobile 21, les autres éléments étant des anneaux de blindage tels que ceux 102, 116 qui encadrent l'armature 54a.

Sur les figures 8 et 9, les lignes de séparation en traits mixtes respectivement a-a et b-b encadrent la partie liée au rotor du dispositif de couplage selon l'invention.

L'armature 54a est reliée à la masse par l'intermédiaire d'une résistance 117 montée en surface sur la couche 88 du disque 21.

Les résistances 111 et 117, de valeur respective par exemple égale à 1kΩ et 10 MΩ, ont pour fonction d'éviter que les armatures respectives 54b, 54a ne se chargent lors de la rotation du disque 21 et ne créent une différence de potentielle parasite aux bornes de l'organe de couplage 54. L'armature réceptrice 54a est également reliée à un circuit récepteur 86h déjà indiqué sur la figure 4 et qui est monté en surface sur la couche 88 du disque 21.

Le circuit récepteur 86h est un circuit adaptateur d'impédance qui comprend un transistor à effet de champ à double porte (MOSFET) 118 dont la grille 1 reçoit le signal de l'armature 54a et la grille 2 est reliée à une source de tension positive V+ par l'intermédiaire de deux résistances en série 119, 120. Le drain du transistor 118 est relié à la source V+ via la résistance 120 et à une capacité 121 qui est reliée à la masse.

La capacité 121 et la résistance 120 ont pour fonction de filtrer l'alimentation. Le collecteur du transistor 118 est relié à une source de tension négative V- par l'intermédiaire d'une résistance 122.

De préférence, les résistances 119, 120 et 122 ont pour valeur respective 100kΩ, 100Ω et 2kΩ et la capacité 121 a une valeur de 100 nF.

Le montage de ce circuit récepteur est avantageux pour la raison suivante.

Compte tenu des faibles valeurs des condensateurs de couplage, à savoir inférieures à 20 pF, il convient, pour obtenir une fréquence de coupure la plus faible possible (affectant la limite inférieure de la bande passante), de prévoir une forte impédance R117(quelques Mégohms) en dérivation vers la masse entre le condensateur de couplage et le transistor 118.

Cette impédance unique de 10 Mégohms peut être remplacée par le montage équivalent appelé en anglais Boot-strap, et composé d'éléments de plus faible impédance (ex : 1 Mégohm).

En sortie du circuit récepteur 86h, l'impédance vue par le circuit d'amplification 61 qui envoie les signaux d'écriture à la tête 42 est par exemple de l'ordre de 100 ohms.

La source du transistor à effet de champ 118 est également reliée à un anneau appelé anneau de garde 123 par l'intermédiaire d'une résistance 124.

Cet anneau est réalisé sous la forme d'une piste conductrice circulaire en cuivre disposée dans la couche 96 du disque 21 et de largeur inférieure à celle de l'anneau de couplage 54a (armature réceptrice).

L'anneau de garde a un effet d'écran vis-à-vis des signaux parasites provenant des composants montés en surface sur la couche 88 et des pistes conductrices de cette couche et qui pourraient atteindre l'armature 54a.

En outre, en prélevant les signaux issus du transistor et en les ramenant sur cet anneau de garde 123, le potentiel de l'armature réceptrice 54a se retrouve sur l'anneau de garde et ainsi la capacité parasite par rapport à la masse entre l'armature 54a et l'anneau de garde 123 est réduite.

Il convient de noter que l'anneau de garde 123 est également entouré de deux anneaux de blindage 125, 126 formés dans la couche 96 du disque et qui ont la même fonction que les anneaux 112 et 114 du disque 22.

La figure 9 montre en détail l'ensemble de la circuiterie électronique pour l'une 31 des têtes de lecture.

En l'occurrence, la tête de lecture 31 est reliée à son circuit d'amplification 64 associé, tous deux disposés sur le plateau tournant 5. La sortie du circuit 64 (connu en soi) est reliée, par le moyeu 14 du rotor, à l'organe de couplage 73 et plus précisément à l'armature tournante 73a, qui constitue ici l'armature réceptrice par l'intermédiaire d'un condensateur 127 et d'une résistance 128 reliée à la masse, tous deux montés en surface sur la couche 88 du disque 21. Des anneaux de blindage 126, 129, 130 sont formés dans la couche 96 afin de créer un effet d'écran autour de l'armature 73a vis-à-vis des capacités parasites. L'action de ces anneaux s'ajoute à celle des anneaux de blindage 102, 131 qui encadrent l'armature 73a. L'armature fixe 73b, qui constitue ici l'armature émettrice, est reliée aux moyens 81 de lecture (figure 4).

Les informations, après avoir été captées par la tête 31, sont amplifiées par le circuit 64, puis transmises du rotor au stator par l'organe de couplage 73, puis vers les moyens 81 de lecture et de traitement, via le circuit récepteur 87a haute impédance monté en surface sur la couche 89 du disque 22.

Le circuit d'amplification 64 a une faible impédance de sortie, par exemple 10 ohms.

Le circuit récepteur 87a est similaire, dans sa conception et son fonctionnement, au circuit récepteur 86h de la figure 8; il en est de même du circuit amplificateur 64, similaire du circuit amplificateur 61 de la figure 8.

Les signaux issus du transistor (non représenté) du circuit 87a sont également prélevés et envoyés sur un anneau de garde 132 disposé dans la couche 97 du disque 22. Cet anneau de garde est entouré de deux anneaux de blindage 114, 133 disposés dans la même couche. L'armature réceptrice 73b de l'organe de couplage est elle aussi entourée de deux anneaux de blindage 103, 134 disposés dans la couche 101 du disque 22.

Ainsi, il est prévu un ensemble de circuits conforme à celui de la figure 8, pour chaque tête d'enregistrement, et à celui de la figure 9 pour chaque tête de lecture.

En raison du fait que l'impédance entre les deux masses de référence respectivement du rotor et du stator n'est pas nulle, une tension identique, appelée potentiel de mode commun, apparaît aux bornes de chaque organe de couplage et perturbe la transmission des signaux par ces organes de couplage.

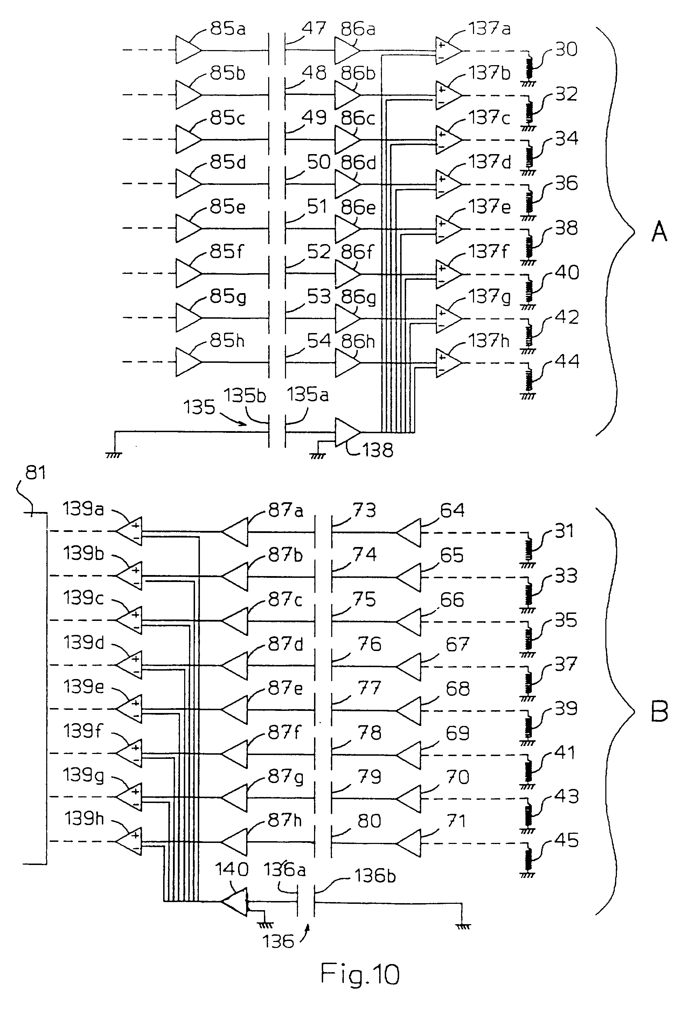

Pour remédier à ce problème un anneau de couplage supplémentaire 135 (resp.136) est prévu pour tous les circuits destinés à l'enregistrement (resp. la lecture) repérés par la lettre A (resp.B) sur la droite de la figure 10.

Ces anneaux de couplage permettent de mesurer le potentiel de mode commun pour chacun des circuits d'enregistrement et de lecture et qui apparaît respectivement aux bornes des organes de couplage 47-54 et 73-80.

Ainsi, pour les circuits d'enregistrement (A), les moyens émetteurs d'information 85 a-h émettent des signaux à transmettre par les organes de couplage 47-54 et les circuits récepteurs 86 a-h des signaux transmis adressent respectivement ces signaux à l'entrée non inverseuse des amplificateurs différentiels 137 a-h.

L'anneau de couplage 135 a une armature 135 b reliée à la masse du disque 21 tandis que l'autre armature 135a est reliée à l'une des entrées d'un amplificateur différentiel 138 dont l'autre entrée est à la masse.

La sortie de l'amplificateur 138 est envoyée respectivement sur l'entrée inverseuse des amplificateurs 137 a-h afin que les signaux correspondant au potentiel de mode commun présents dans les signaux issus des récepteurs 86 a-h et de l'amplificateur 138 s'annulent.

De cette manière, les signaux enregistrés sur les têtes magnétiques 30, 32, 34, 36, 38, 40, 42 et 44 ne seront plus affectés par ce bruit parasite. De même, pour les circuits de lecture (B), les signaux provenant des têtes de lecture 31, 33, 35, 37, 39, 41, 43, 45 sont respectivement amplifiés par les circuits 64-71, transmis par les organes de couplage 73-80 traités par les circuits de réception 87 a-h et envoyés sur l'entrée non inverseuse des amplificateurs différentiels 139 a-h.

L'anneau de couplage 136 a une armature 136b reliée à la masse du disque 22 tandis que l'autre armature est reliée à l'entrée d'un amplificateur différentiel 140 dont l'autre entrée est à la masse.

La sortie de cet amplificateur 140 est envoyée respectivement sur l'entrée inverseuse des amplificateurs 139 a-h pour que les signaux issus de ces amplificateurs et adressés aux moyens récepteurs 81 ne comportent plus ce potentiel de mode commun.

La bande passante du dispositif de couplage selon l'invention est par exemple de l'ordre de 150 MHz alors que celle du dispositif de couplage décrit dans le document EP 0 332 530 est de l'ordre de 80MHz en raison de la longueur des liaisons filiaires.

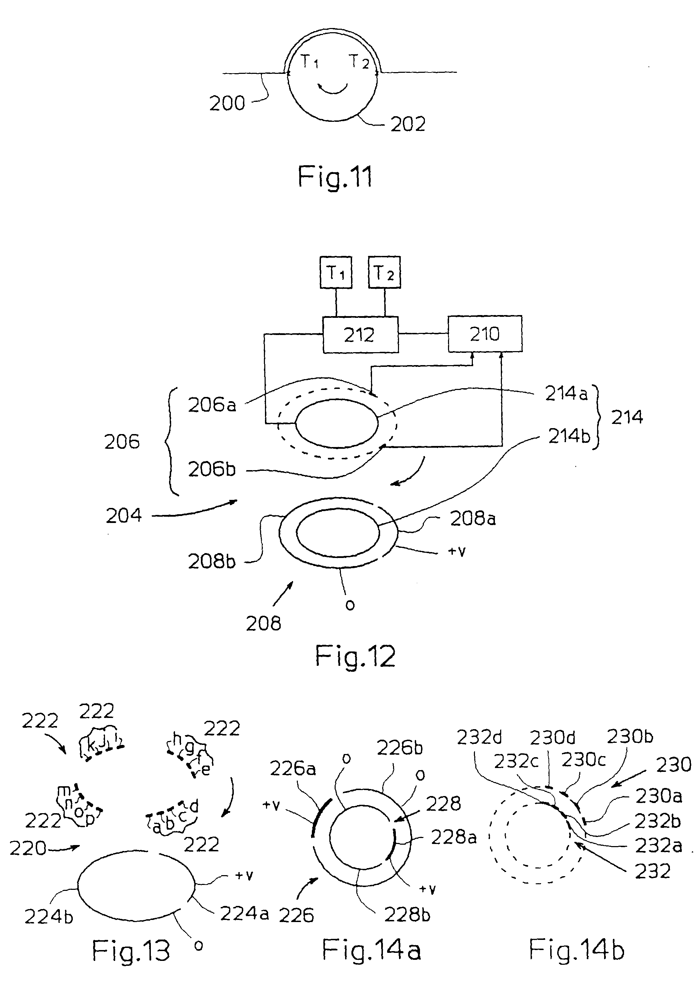

Il convient de noter qu'il peut être intéressant d'utiliser des organes de couplage constitués de segments d'anneaux de couplage lorsqu'une bande magnétique 200 s'enroule sur la paroi extérieure du tambour 202 suivant un demi-cercle (enroulement dit à 180°) vu en section transversale par rapport à l'axe de rotation dudit tambour (Fig11).

La bande peut même s'enrouler sur une portion angulaire de la paroi intérieure du tambour qui est inférieure à 180° (ex.90°).

Ainsi, deux têtes magnétiques T1, T2 diamétralement opposées situées à la périphérie du tambour 202 ne voient pas passer la bande magnétique 200 au même moment (Fig.12). Sur cette figure le plateau porteur des têtes magnétiques n'est pas représenté par souci de clarté.

Suivant cette configuration, un organe de couplage 204 est constitué d'une partie mobile 206 liée au rotor et d'une partie fixe 208 liée au stator et qui sont formées chacune par exemple de deux segments d'anneau.

Dans ce mode de réalisation, l'organe de couplage 204 à segments d'anneau est utilisé pour commander la sélection des têtes magnétiques suivant leur position par rapport à la bande 200 (Fig. 11).

Les deux segments d'anneau 206a, 206b de la partie mobile 206 sont connectés, d'une part, à un circuit 210 comprenant une bascule de type flip-flop (en langue anglo-saxonne) et, d'autre part, à un multiplexeur 212 qui permet de sélectionner l'une des têtes magnétiques T1 et T2.

Pour la partie fixe 208 de l'organe de couplage, l'un 208a des segments d'anneau est par exemple alimenté sous une tension +V alors que l'autre segment 208b n'est pas alimenté.

La position des segments d'anneau 206a, 206b est représentative de la position des têtes magnétiques T1, T2 sur le tambour.

La longueur du segment 208a correspond à la distance angulaire parcourue par une tête magnétique lors de la période d'écriture ou de lecture de ladite tête sur la bande, ce qui correspond à un angle de l'ordre de 160°.

Ainsi, les segments d'anneau dans leur mouvement traduisent fidèlement le déplacement des têtes magnétiques par rapport à la bande et lorsqu'une tête magnétique est sélectionnée, l'autre ne l'est plus.

Au cours de la rotation de la partie mobile 206 et des têtes T1, T2, lorsque l'un des segments d'anneau de la partie mobile de l'organe de couplage, par exemple 206a, qui était en vis à vis du segment 208b de la partie fixe, se déplace dans le sens de la flèche indiquée sur la figure 12 et vient en vis à vis du segment 208a de la partie fixe, ledit segment 206a voit le passage de 0 à +V et reçoit une impulsion positive de mise en conduction par couplage capacitif entre les éléments capacitifs en regard. Cette impulsion est envoyée sur le circuit 210 dont la bascule va mémoriser l'ordre de commutation de la tête magnétique T₁ et le niveau de sortie de cette bascule va commander le multiplexeur 212 qui va effectuer la commutation sur la tête magnétique T1 (Fig.12). L'autre segment d'anneau 206b lors de son passage au dessus du segment d'anneau fixe 208b voit le passage de +V à 0 et reçoit une impulsion d'arrêt de conduction qui est traitée par les circuits 210 et 212 ce qui va provoquer l'arrêt de la sélection de la tête T2.

Lorsque le segment 206a voit ensuite le passage de +V à 0, il reçoit une impulsion négative de mise en arrêt de conduction et le segment complémentaire 206b reçoit une impulsion de mise en conduction ce qui sélectionne la tête magnétique T2 diamétralement opposée et la tête T1 ne se trouve donc plus sélectionnée.

Un organe de couplage capacitif 214 conforme à ceux décrits en référence à la figure 5 est associé à l'organe de couplage 204 et est disposé au centre de celui-ci mais il pourrait très bien se trouver autour de ce dernier.

Cet organe est constitué d'une partie mobile 214a reliée au circuit 212 et d'une partie fixe 214b et il a uniquement pour fonction de transmettre entre le rotor et le stator des signaux électriques représentatifs d'informations enregistrées et/ou lues sur la bande magnétique.

Ainsi cet organe de couplage 214 sera alternativement connecté à la tête magnétique T₁ ou T₂.

Il est également envisageable de prévoir deux organes de couplage capacitif analogues à l'organe 214 et reliés chacun à l'une des têtes magnétiques T₁ ou T₂, l'ordre d'écriture ou de lecture à une tête magnétique étant fourni par un organe de couplage capacitif associé conforme à celui décrit en référence à la figure 12.

Toutefois, cette solution nécessite l'emploi d'un organe de couplage supplémentaire par rapport à la solution décrite en référence à la figure 12 et donc occupe un peu plus de place que celle-ci.

Il convient de noter que l'on doit avoir au moins un organe de couplage pour la commutation des têtes d'écriture et au moins un pour la commutation des têtes de lecture.

Toutefois, avec un nombre élevé de têtes magnétiques (huit, seize, trente deux ...) dans l'enregistreur il est possible de n'avoir qu'un seul organe de couplage en lecture (resp. en écriture) destiné à assurer la commutation entre les organes de couplage capacitif assurant la transmission d'informations lues (resp. enregistrées) sur la bande magnétique et les différentes têtes.

La Figure 13 représente un organe de couplage 220 qui peut assurer la commutation de seize têtes magnétiques d'écriture ou de lecture. Les organes de couplage destinés à transmettre les informations enregistrées ou lues sur la bande magnétique et auxquels est associé l'organe de couplage de commutation 220 ne sont pas représentés sur cette figure. Il peut y avoir un de ces organes de couplage par tête magnétique ou un pour deux ou plus de deux têtes magnétiques ce qui réduit l'encombrement du dispositif de couplage.

L'organe de couplage de commutation 220 possède une partie mobile 222 qui est constituée de seize segments d'anneaux 222 a - p disposés suivant une même circonférence et positionnés de façon à traduire la position des seize têtes magnétiques correspondantes d'écriture ou de lecture.

L'organe 220 possède également une partie fixe 224 constituée de deux segments d'anneau 224a, 224b analogues aux segments d'anneau 208a, 208b de ia figure 12 et respectivement soumis à une tension +V et 0V.

De façon analogue à ce qui a été décrit en relation avec la figure 12, la sélection de chacune des seize têtes magnétiques (en écriture ou en lecture) va être réalisée au moyen de circuits du type de ceux 210, 212 représentés à la figure 12, lorsque, au cours du mouvement de rotation du plateau porte têtes, le segment d'anneau 222 a ou b ... ou p correspondant qui était en vis-à-vis du segment d'anneau fixe 224b se trouve alors en vis-à-vis du segment d'anneau fixe 224a et voit ainsi par couplage capacitif une transition de 0 à +V.

De même, une tête ne sera plus sélectionnée lorsque le segment d'anneau mobile correspondant verra par couplage capacitif une transition de +V à 0.

A titre de variante, pour assurer la commutation de huit têtes magnétiques avec une meilleure résolution, il est envisageable d'utiliser deux organes de couplage capacitif concentriques comme représenté aux figures 14 a et b.

La figure 14a (resp.14b) représente en vue de dessus la partie fixe (resp. mobile) des deux organes de couplage. La partie fixe 226 (resp.228) de l'organe de couplage extérieur (resp. intérieur) est constituée de deux segments d'anneau 226a,b (resp. 228 a,b) dont l'un 226a (resp 228a) a une longueur correspondant à la période d'écriture ou de lecture d'une tête magnétique sur la bande et est soumis à une tension +V alors que l'autre segment 226b (resp.228b) n'est pas soumis à une tension.

La partie mobile 230 (resp. 232) de l'organe de couplage extérieur (resp. intérieur) est constituée de quatre segments d'anneaux 230 a-d (resp. 232a-d) qui sont respectivement représentatifs de la position des huit têtes magnétiques.

Le fonctionnement lors du mouvement de rotation de la partie mobile (Fig. 14b) est analogue à ce qui a déjà été décrit précédemment en relation avec les figures 11 à 13.

Il convient de noter que l'utilisation d'un organe de couplage à segments d'anneau comme décrit en référence aux figures 11 à 13 peut également remplacer un système de commutation classique utilisé dans des enregistreurs magnétiques de l'art antérieur où le dispositif de couplage pour la transmission des signaux électriques représentatifs d'informations enregistrées et/ou lues sur la bande est également connu, tel que par exemple celui décrit dans le brevet européen n°0 332 520.

L'organe de couplage à segments d'anneau conforme à l'invention peut même remplacer un système de commutation utilisé dans un enregistreur magnétique de l'art antérieur où le dispositif de couplage est réalisé par des transformateurs.

L'organe de couplage à segments d'anneau utilisé pour la commutation de têtes magnétiques est avantageux par rapport aux systèmes de commutation classiques puisqu'il fait partie du dispositif de couplage capacitif et il est donc directement lié au déplacement des têtes magnétiques. Ceci permet d'éviter des erreurs de précision lorsqu'un système de commutation classique des têtes rapporté doit être aligné avec l'axe du rotor et doit être synchronisé avec le déplacement des têtes.

En outre, un tel organe de couplage rend plus simple la conception de l'enregistreur étant donné que les organes de couplage capacitifs transmetteurs d'informations et ceux destinés à la commutation sont inclus dans le même dispositif de couplage et sont issus de la même technologie. lls sont donc conçus lors des mêmes étapes de fabrication.

Par ailleurs, la partie électronique de l'enregistreur se trouve simplifiée par rapport à celle des enregistreurs de l'art antérieur qui utilisent d'autres systèmes de commutation.

## Revendications

1. Enregistreur/lecteur magnétique à bande comprenant plusieurs têtes (30-45; T₁, T₂) magnétiques animées d'un mouvement de rotation à la périphérie d'une fente équatoriale (4) d'un tambour cylindrique (1), sur la surface duquel défile une bande (7) enroulée hélicoïdalement et un dispositif de couplage capacitif (20), ledit dispositif étant destiné à transmettre des signaux électriques, entre une partie rotative autour d'un axe, liée aux têtes et formant rotor et une partie fixe formant stator, ledit dispositif (20) comprenant au moins un organe de couplage (47-54, 73-80; 204; 220) comportant une partie mobile (47a-54a, 73a-80a; 206 ; 222 ; 230, 232) et une partie fixe (47b-54b, 73b-80b) liées respectivement au rotor et au stator, caractérisé en ce que les parties mobile et fixe de l'organe de couplage sont réalisées sous la forme d'anneaux et/ou de segments d'anneaux, dits de couplage, respectivement disposés dans deux plans parallèles entre eux (P₁, P₂) et perpendiculaires audit axe de rotation du rotor, les parties mobile et fixe de chaque organe de couplage étant disposées en regard l'une de l'autre.

2. Enregistreur/lecteur selon la revendication 1, dans lequel le dispositif de couplage transmet des signaux électriques représentatifs d'informations enregistrées et/ou lues sur la bande.

3. Enregistreur/lecteur selon la revendication 2, dans lequel au moins un organe de couplage est formé d'anneaux.

4. Enregistreur/lecteur selon la revendication 3, dans lequel un organe de couplage est associé à au moins une tête magnétique.

5. Enregistreur/lecteur selon l'une des revendications 1 à 4, dans lequel la dimension radiale des anneaux de couplage (47a-54a, 47b-54b, 73a-80a, 73b-80b) diminue lorsque la distance de ceux-ci par rapport à l'axe de rotation augmente.

6. Enregistreur/lecteur selon l'une des revendications 1 à 5, dans lequel un anneau dit de blindage (102;103) est disposé entre deux anneaux de couplage consécutifs (54a, 73a ; 54b, 73b), dans le même plan que ceux-ci.

7. Enregistreur/lecteur selon la revendication 6, dans lequel la dimension radiale des anneaux de blindage diminue lorsque la distance de ceux-ci par rapport à l'axe de rotation augmente.

8. Enregistreur/lecteur selon l'une des revendications 1 à 7, dans lequel les anneaux de couplage liés au rotor (47a-54a, 73a-80a) et au stator (47b-54b, 73b-80b) sont respectivement disposés sur deux faces en regard de deux substrats différents (21,22).

9. Enregistreur/lecteur selon la revendication 7 ou 8, dans lequel le substrat (21, 22) est du type multicouche.

10. Enregistreur/lecteur selon la revendication 8, dans lequel la face de chaque substrat (21, 22) qui est opposée à celle portant les anneaux de couplage porte des circuits électroniques.

11. Enregistreur/lecteur selon la revendication 10, dans lequel les circuits électroniques comprennent des circuits récepteurs (86a-h, 87a-h) des signaux électriques transmis par le dispositif de couplage rotatif capacitif ainsi que des circuits d'émission des signaux électriques à transmettre par ledit dispositif.

12. Enregistreur/lecteur selon la revendication 11, dans lequel les circuits récepteurs (86a-h, 87a-h) des signaux électriques transmis par le dispositif de couplage rotatif capacitif (20) sont des circuits adaptateurs d'impédance.

13. Enregistreur/lecteur selon la revendication 12, dans lequel l'un des anneaux ou segments d'anneaux de couplage de chaque organe de couplage (47-54, 73-80) est relié à un circuit récepteur (86a-h, 87a-h) comprenant un élément à grande impédance d'entrée.

14. Enregistreur/lecteur selon la revendication 13, dans lequel l'élément à grande impédance d'entrée est un transistor à effet de champ à double porte.

15. Enregistreur/lecteur selon la revendication 14, dans lequel le circuit récepteur (86a-h, 87a-h) comprend en outre une impédance de valeur élevée comparée à la capacité d'entrée équivalente du transistor à effet de champ à double porte.

16. Enregistreur/lecteur selon les revendications 1, 8, 9 et 12, dans lequel pour chaque anneau ou segment d'anneau de couplage relié à un circuit récepteur (86h, 87a) comprenant un élément à grande impédance d'entrée un anneau dit de garde (123, 132) est formé dans le substrat correspondant et est relié à la sortie dudit élément à grande impédance d'entrée.

17. Enregistreur/lecteur selon la revendication 16, dans lequel l'anneau de garde est disposé en regard de l'anneau ou du segment d'anneau de couplage pour former un écran vis-à-vis de signaux parasites provenant de la face du substrat qui porte les circuits électroniques.

18. Enregistreur/lecteur selon la revendication 16 ou 17, dans lequel deux anneaux de blindage (125, 126, 114, 133) supplémentaires disposés dans le substrat multicouche encadrent l'anneau de garde (123, 132) dans un plan perpendiculaire à l'axe du rotor.

19. Enregistreur/lecteur selon l'une des revendications 1 à 18, dans lequel un organe de couplage supplémentaire (135, 136) est prévu pour mesurer un bruit correspondant à un potentiel dit de mode commun qui apparaît aux bornes des organes de couplage (47-54, 73-80) destinés à transmettre des signaux électriques représentatifs d'informations enregistrées sur la bande (resp. lues) et les signaux issus de ces organes de couplage et de l'organe de couplage supplémentaire sont ensuite soustraits pour que le potentiel de mode commun s'annule.

20. Enregistreur/lecteur selon l'une des revendications précédentes, dans lequel le dispositif de couplage (204; 220) a une fonction de commutation des têtes magnétiques (T₁, T₂) suivant leur position par rapport à la bande.

21. Enregistreur/lecteur selon la revendication 20, dans lequel au moins un organe de couplage est formé de segments d'anneau.

22. Enregistreur/lecteur selon les revendications 2 et 20, dans lequel le dispositif de couplage comprend plusieurs organes de couplage dont au moins un est formé de segments d'anneau, les autres organes de couplage étant formés d'anneaux.
